# EUROPEAN PATENT APPLICATION

(11) **EP 4 831 213 A1**
(43) Date of publication of application: **28.10.2026**
(21) Application number: 24906794.3
(22) Date of filing: 14.05.2024
(51) Int. Cl.: C08F 290/06, C08F 2/50, C25B 1/04, C25B 9/00, C25B 9/23, C25B 11/032, C25B 13/08, H01M 8/10, H01M 8/103, H01M 8/1027, H01M 8/1081

(54) **ULTRAVIOLET CURABLE RESIN COMPOSITION, POLYMER ELECTROLYTE MEMBRANE, POLYMER ELECTROLYTE FUEL CELL, POLYMER ELECTROLYTE WATER ELECTROLYSIS DEVICE, AND METHOD FOR PRODUCING POLYMER ELECTROLYTE MEMBRANE**

(30) Priority: 19.12.2023 JP 2023214210
(71) Applicant: ARISAWA MFG. CO., LTD., Joetsu-shi, Niigata 943-8610 (JP)
(72) Inventor: MIYAJI Kio, Joetsu-shi, Niigata 943-8610 (JP); ICHIMURA Masahiro, Joetsu-shi, Niigata 943-8610 (JP); TAI Makoto, Joetsu-shi, Niigata 943-8610 (JP); SATO Tatsuya, Joetsu-shi, Niigata 943-8610 (JP)
(74) Representative: v. Bezold & Partner Patentanwälte - PartG mbB
(86) International application number: PCT/JP2024/017714
(87) International publication number: WO 2025/134404

(57) **Abstract**

An ultraviolet curable resin composition includes: a urethane (meth)acrylate with a weight-average molecular weight of 1500 or more and 20000 or less and a double bond equivalent of 600 g/mol or more and 7500 g/mol or less; a (meth)acrylate monomer with a molecular weight of 150 or more and 300 or less; a vinyl monomer having an acidic functional group; and a photopolymerization initiator.

## Description

### Technical Field

The present disclosure relates to an ultraviolet curable resin composition, a polymer electrolyte membrane, polymer electrolyte fuel cell, polymer electrolyte water electrolysis device, and a method for producing the polymer electrolyte membrane.

### Background Art

A proton conductive membrane including only a polymer having a phosphoric acid group in a side chain easily tears and has low strength. As a replacement for such a proton conductive membrane, a proton conductive membrane that causes polymers having a phosphoric acid group in a side chain to be polymerized within pores of a porous membrane and causes the polymers to be supported in the pores is disclosed in Patent Literature 1. The proton conductive membrane is used as, for example, a polymer electrolyte membrane in a polymer electrolyte fuel cell.

### Citation List

### Patent Literature

Patent Literature 1: Japanese Patent No. 4621344

### Summary of Invention

### Technical Problem

Since pores in a porous membrane constituting a proton conductive membrane are fine pores, it is difficult to cause polymers to be supported in all the pores and difficult to cause excellent proton conductivity to manifest itself throughout the entire membrane.

The present disclosure has been made in consideration of the above-described circumstances, and an objective of the present disclosure is to provide a polymer electrolyte membrane having excellent proton conductivity and high strength, a polymer electrolyte fuel cell and a polymer electrolyte water electrolysis device including the polymer electrolyte membrane, a method for producing the polymer electrolyte membrane, and an ultraviolet curable resin composition that can be used as a resin composition constituting the polymer electrolyte membrane.

### Solution to Problem

The present disclosure is as follows.
[1] An ultraviolet curable resin composition according to the present disclosure includes:
   a urethane (meth)acrylate with a weight-average molecular weight of 1500 or more and 20000 or less and a double bond equivalent of 600 g/mol or more and 7500 g/mol or less;
   a (meth)acrylate monomer with a molecular weight of 150 or more and 300 or less;
   a vinyl monomer having an acidic functional group; and
   a photopolymerization initiator,
   wherein a content of the urethane (meth)acrylate is 20 wt% or more and 45 wt% or less based on a total of 100 wt% of the urethane (meth)acrylate, the (meth)acrylate monomer, and the vinyl monomer,
   a content of the (meth)acrylate monomer is 15 wt% or more and 45 wt% or less based on a total of 100 wt% of the urethane (meth)acrylate, the (meth)acrylate monomer, and the vinyl monomer, and
   a content of the vinyl monomer is 20 wt% or more and 55 wt% or less based on a total of 100 wt% of the urethane (meth)acrylate, the (meth)acrylate monomer, and the vinyl monomer.
[2] The acidic functional group may be at least one type selected from a group consisting of a carboxy group, a phosphonic acid group, a sulfonic acid group, and a phosphoric acid group.
[3] A number of the acidic functional groups in the vinyl monomer may be 1 or 2.
[4] A polymer electrolyte membrane according to the present disclosure includes a cured ultraviolet curable resin composition according to any one of [1] to [3].
[5] A polymer electrolyte fuel cell according to the present disclosure includes:
   the polymer electrolyte membrane according to [4];
   an anode catalyst layer that is layered on one surface of the polymer electrolyte membrane;
   a cathode catalyst layer that is layered on other surface of the polymer electrolyte membrane;
   a first gas diffusion layer that is layered on other surface of the anode catalyst layer, the other surface being a surface on an opposite side to one surface of the anode catalyst layer on which the polymer electrolyte membrane is layered;
   a second gas diffusion layer that is layered on other surface of the cathode catalyst layer, the other surface being a surface on an opposite side to one surface of the cathode catalyst layer on which the polymer electrolyte membrane is layered;
   a first separator that is arranged on other surface of the first gas diffusion layer, the other surface being a surface on an opposite side to one surface of the first gas diffusion layer on which the anode catalyst layer is layered; and
   a second separator that is arranged on other surface of the second gas diffusion layer, the other surface being a surface on an opposite side to one surface of the second gas diffusion layer on which the cathode catalyst layer is layered.
[6] A polymer electrolyte water electrolysis device according to the present disclosure includes:
   the polymer electrolyte membrane according to [4];
   an anode catalyst layer that is layered on one surface of the polymer electrolyte membrane;
   a cathode catalyst layer that is layered on other surface of the polymer electrolyte membrane;
   a first gas diffusion layer that is layered on other surface of the anode catalyst layer, the other surface being a surface on an opposite side to one surface of the anode catalyst layer on which the polymer electrolyte membrane is layered;
   a second gas diffusion layer that is layered on other surface of the cathode catalyst layer, the other surface being a surface on an opposite side to one surface of the cathode catalyst layer on which the polymer electrolyte membrane is layered;
   a first separator that is arranged on other surface of the first gas diffusion layer, the other surface being a surface on an opposite side to one surface of the first gas diffusion layer on which the anode catalyst layer is layered; and
   a second separator that is arranged on other surface of the second gas diffusion layer, the other surface being a surface on an opposite side to one surface of the second gas diffusion layer on which the cathode catalyst layer is layered.
[7] A method for producing a polymer electrolyte membrane according to the present disclosure includes:
   preparing the ultraviolet curable resin composition according to any one of [1] to [3];
   layering a resin layer including the ultraviolet curable resin composition on one separate film;
   arranging another separate film on other surface of the resin layer, the other surface being a surface on an opposite side to one surface of the resin layer on which the one separate film is arranged;
   irradiating the resin layer with ultraviolet light via the one separate film or the another separate film and curing the resin layer; and
   peeling off the one separate film and the another separate film from the cured resin layer.

### Advantageous Effects of Invention

According to the present disclosure, a polymer electrolyte membrane having excellent proton conductivity and high strength, a polymer electrolyte fuel cell and a polymer electrolyte water electrolysis device including the polymer electrolyte membrane, a method for producing the polymer electrolyte membrane, and an ultraviolet curable resin composition that can be used as a resin composition constituting the polymer electrolyte membrane can be provided.

### Brief Description of Drawings

FIG. 1 is a schematic cross-sectional view of a polymer electrolyte membrane of an embodiment;
FIG. 2 is a schematic cross-sectional view illustrating a configuration of a proton exchange type polymer electrolyte fuel cell; and
FIG. 3 is a schematic cross-sectional view illustrating a configuration of a proton exchange type polymer electrolyte water electrolysis device.

### Description of Embodiments

Hereinafter, an ultraviolet curable resin composition, a polymer electrolyte membrane, a polymer electrolyte fuel cell, a polymer electrolyte water electrolysis device, and a method for producing polymer electrolyte membrane that are modes for carrying out the present disclosure (hereinafter, referred to as embodiments) are described in detail. The embodiments are examples for a description of the present disclosure and are not intended to limit the present disclosure to the following description. The present disclosure can be appropriately modified and implemented without departing from the scope of the present disclosure.

In the present disclosure, urethane (meth)acrylate means urethane acrylate or urethane methacrylate. A (meth)acrylate monomer means an acrylate monomer or a methacrylate monomer. Weight means, for example, weight of only resin excluding a volatile component such as organic solvent contained in the resin, that is, weight of a nonvolatile component.

### [Ultraviolet Curable Resin Composition]

The ultraviolet curable resin composition of the embodiment includes a urethane (meth)acrylate, a (meth)acrylate monomer, a vinyl monomer, and a photopolymerization initiator. The ultraviolet curable resin composition as described above can be suitably used as a resin composition constituting a polymer electrolyte membrane having excellent proton conductivity and high strength.

Components contained in the ultraviolet curable resin composition of the embodiment are described below.

### (Urethane (Meth)Acrylate)

Examples of the urethane (meth)acrylate used in the embodiment include adduct-type urethane (meth)acrylate, polycarbonate-based urethane (meth)acrylate, and polyester-based urethane (meth)acrylate. From a viewpoint of obtaining a polymer electrolyte membrane having excellent proton conductivity and high strength, the urethane (meth)acrylate is preferably adduct-type urethane (meth)acrylate or polycarbonate-based urethane (meth)acrylate. The urethane (meth)acrylate may be used alone as a single type, or in combination of two or more types. Note that the adduct-type urethane (meth)acrylate is also referred to as adduct-based urethane (meth)acrylate.

Weight-average molecular weight of the urethane (meth)acrylate is, from a viewpoint of obtaining a polymer electrolyte membrane having high strength, 1500 or more and 20000 or less, preferably 1500 or more and 15000 or less, more preferably 1700 or more and 15000 or less, and still more preferably 5000 or more and 15000 or less. Note that weight-average molecular weight of hydroxy(meth)acrylate can be calculated by gel permeation chromatography (GPC), using standard polymethyl methacrylate.

Double bond equivalent of the urethane (meth)acrylate is, from a viewpoint of obtaining a polymer electrolyte membrane having an excellent proton conductivity and high strength, 600 g/mol or more and 7500 g/mol or less, preferably 750 g/mol or more and 7500 g/mol or less, more preferably 800 g/mol or more and 7500 g/mol or less, and still more preferably 800 g/mol or more and 2500 g/mol or less. The urethane (meth)acrylate may have a double bond in a side chain or at an end of a main chain, and, from a viewpoint of improving reactivity, preferably has double bonds both in a side chain and at an end of the main chain. Note that the double bond equivalent can be calculated from a formula: double bond equivalent (g/mol)=(weight-average molecular weight of monomer)/( number of polymerizable double bonds (mol) in an identical molecule).

The above-described adduct-type urethane (meth)acrylate is obtained by, for example, reacting a hydroxy (meth)acrylate with a diisocyanate. Examples of the hydroxy (meth)acrylate include 2-hydroxyethyl (meth)acrylate, 2-hydroxypropyl (meth)acrylate, and caprolactone-modified 2-hydroxyethyl (meth)acrylate. In addition, the hydroxy (meth)acrylate is preferably a 2-hydroxyethyl (meth)acrylate or a 2-hydroxypropyl (meth)acrylate, from a viewpoint of being easily available. Examples of the diisocyanate include: (i) aromatic diisocyanate such as tolylene diisocyanate, 4, 4'-diphenylmethane diisocyanate, xylene diisocyanate, and naphthalene diisocyanate; (ii) aliphatic diisocyanate such as hexamethylene diisocyanate and trimethylhexamethylene diisocyanate; and (iii) alicyclic diisocyanate such as isophorone diisocyanate, 4, 4'-dicyclohexylmethane diisocyanate, norbornene diisocyanate, and hydrogenated xylene diisocyanate. In addition, the diisocyanate is preferably tolylene diisocyanate, 4, 4'-diphenylmethane diisocyanate, or hexamethylene diisocyanate, from a viewpoint of being easily available.

The above-described polycarbonate-based urethane (meth)acrylate is obtained by reacting, for example, a polycarbonate diol, a hydroxy (meth)acrylate, and a diisocyanate with one another. Examples of the polycarbonate diol include, for example, propylene carbonate diol, hexamethylene carbonate diol, and 3-methylpentene carbonate diol. In addition, the polycarbonate diol is preferably propylene carbonate diol or hexamethylene carbonate diol, from a viewpoint of reactivity.

The above-described polyester-based urethane (meth)acrylate is obtained by, for example, reacting a polyester polyol, a hydroxy (meth)acrylate, and a diisocyanate with one another.

Examples of the polyester polyol include a reactant of an alcohol component and an acid component. Examples of the alcohol component include, for example, ethylene glycol, propylene glycol, butanediol, 1, 6-hexanediol, 2-methyl-1, 8-octanediol, nonanediol, cyclohexanedimethanol, neopentyl glycol, 3-methyl-1, 5-pentanediol, and hydroxypivalic acid neopentyl glycol ester. In addition, the alcohol component is preferably ethylene glycol, propylene glycol, butanediol, 1, 6-hexanediol, 2-methyl-1, 8-octanediol, nonanediol, or cyclohexanedimethanol, from a viewpoint of reactivity.

Examples of the acid component include dibasic acid such as adipic acid, sebacic acid, succinic acid, maleic acid, phthalic acid, hexahydrophthalic acid, and terephthalic acid or anhydrides thereof, or a ring-opening reactant of polycarbonate diol and caprolactone. In addition, the acid component is preferably adipic acid or phthalic acid, from a viewpoint of advancing condensation polymerization efficiently.

The content of the urethane (meth)acrylate contained in the ultraviolet curable resin composition is 20 wt% or more and 45 wt% or less, and preferably 25 wt% or more and 40 wt% or less based on a total of 100 wt% of the urethane (meth)acrylate, the (meth)acrylate monomer, and the vinyl monomer. The ultraviolet curable resin composition containing the urethane (meth)acrylate at the above-described ratio enables strength of the polymer electrolyte membrane to be improved without reducing proton conductivity performance.

### ((Meth)Acrylate Monomer)

Examples of the (meth)acrylate monomer used in the embodiment include butyl (meth)acrylate, stearyl (meth)acrylate, benzyl (meth)acrylate, phenoxyethyl (meth)acrylate, and diethylene glycol di(meth)acrylate. In addition, the (meth)acrylate monomer is more preferably benzyl (meth)acrylate, phenoxyethyl (meth)acrylate, or diethylene glycol di(meth)acrylate from a viewpoint of compatibility with other materials constituting the ultraviolet curable resin composition.

The molecular weight of the (meth)acrylate monomer, is, for example, 150 or more and 300 or less, preferably 150 or more and 250 or less, and more preferably 175 or more and 225 or less, from a viewpoint of diluting the urethane (meth)acrylate, the vinyl monomer, and the photopolymerization initiator with the (meth)acrylate monomer.

The content of the (meth)acrylate monomer contained in the ultraviolet curable resin composition is 15 wt% or more and 45 wt% or less, and preferably 15 wt% or more and 40 wt% or less based on a total of 100 wt% of the urethane (meth)acrylate, the (meth)acrylate monomer, and the vinyl monomer from a viewpoint of reducing viscosity of the ultraviolet curable resin composition. Because of this configuration, the vinyl monomer having an acidic functional group that influences the proton conductivity is uniformly dispersed in the ultraviolet curable resin composition. By curing the ultraviolet curable resin composition with the vinyl monomer uniformly dispersed, a polymer electrolyte membrane where acidic functional groups exist in the thickness direction of the membrane and on an overall main surface of the membrane can be obtained. Such a polymer electrolyte membrane has excellent proton conductivity across the membrane.

### (Vinyl Monomer)

The vinyl monomer has an acidic functional group. Examples of the vinyl monomer having an acidic functional group include monofunctional phosphoric acid (meth)acrylate (2-methacryloyloxyethyl acid phosphate), monofunctional sulfonic acid (meth)acrylate (2-(methacryloyloxy)ethanesulfonic acid), phosphonic acid (meth)acrylate, phosphonic acid di(meth)acrylate (phosphoric acid bis[2-(methacryloyloxyethyl)]), vinylphosphonic acid, and vinylsulfonic acid. The vinyl monomer is preferably monofunctional phosphoric acid (meth)acrylate (2-methacryloyloxyethyl acid phosphate), monofunctional sulfonic acid (meth)acrylate (2-(methacryloyloxy)ethanesulfonic acid), phosphonic acid di(meth)acrylate, vinylphosphonic acid, or vinylsulfonic acid, from a viewpoint of storage stability.

The acidic functional group is at least one type selected from a group consisting of a carboxy group, a phosphonic acid group, a sulfonic acid group, and a phosphoric acid group. From a viewpoint of obtaining a polymer electrolyte membrane having excellent proton conductivity, the acidic functional group is preferably a phosphonic acid group, a sulfonic acid group, or a phosphoric acid group. The number of acidic functional groups in the vinyl monomer is preferably 1 or 2 from a viewpoint of obtaining a polymer electrolyte membrane having an excellent proton conductivity. Examples of the vinyl monomer containing phosphonic acid, sulfonic acid, or phosphoric acid include vinylphosphonic acid, vinylsulfonic acid, monofunctional phosphoric acid (meth)acrylate (2-methacryloyloxyethyl acid phosphate), and monofunctional sulfonic acid (meth)acrylate (2-(methacryloyloxy)ethanesulfonic acid).

The molecular weight of the vinyl monomer is, for example, 100 or more and 1000 or less, preferably 100 or more and 700 or less, more preferably 100 or more and 400 or less, from a viewpoint of obtaining a polymer electrolyte membrane having excellent proton conductivity.

The amount of the vinyl monomer contained in the ultraviolet curable resin composition is 20 wt% or more and 55 wt% or less, and preferably 20 wt% or more and 50 wt% or less based on a total of 100 wt% of the urethane (meth)acrylate, the (meth)acrylate monomer, and the vinyl monomer. The polymer electrolyte membrane obtained by curing such an ultraviolet curable resin composition has excellent proton conductivity.

### (Photopolymerization Initiator)

Examples of the photopolymerization initiator include a short wavelength absorption type photopolymerization initiator that absorbs light with a wavelength of less than 400 nm and a long wavelength absorption type photopolymerization initiator that absorbs light with a wavelength of 400 nm or more. Examples of the short wavelength absorption type photopolymerization initiator include Omnirad2959, Omnirad651, Omnirad379, Omnirad907, or the like manufactured by IGM RESINS. Examples of the long wavelength absorption type photopolymerization initiator include Omnirad184, OmniradTPO, Omnirad819, OmniradEMK, or the like manufactured by IGM RESINS.

From a viewpoint of uniformly curing an ultraviolet curable resin composition in the thickness direction of the polymer electrolyte membrane including the ultraviolet curable resin composition, the photopolymerization initiator is preferably a long wavelength absorption type photopolymerization initiator. The photopolymerization initiator may be used alone as a single type, or in combination of two or more types. The content of the photopolymerization initiator is preferably 1 wt% or more and 10 wt% or less, more preferably 1 wt% or more and 7 wt% or less, and still more preferably 1 wt% or more and 3 wt% or less based on a total of 100 wt% of the urethane (meth)acrylate, the (meth)acrylate monomer, and the vinyl monomer, from a viewpoint of promoting photocuring reaction.

### (Other Components)

Additives may be added to the ultraviolet curable resin composition of the embodiment to an extent not impairing the proton conductivity and strength of the polymer electrolyte membrane. Examples of the additives include a chain transfer agent, a sensitizing agent, a dispersing agent, a softening agent, a heat aging inhibitor, and a silane coupling agent.

The ultraviolet curable resin composition of the embodiment is obtained by adding and mixing predetermined amounts of the above-described materials in a container.

### [Polymer Electrolyte Membrane]

Next, a configuration of the polymer electrolyte membrane of the embodiment is described.

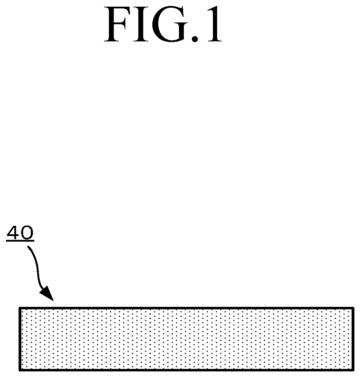

The polymer electrolyte membrane 40 of the embodiment illustrated in FIG. 1 includes the ultraviolet curable resin composition of the embodiment. Thickness of the polymer electrolyte membrane 40 of the embodiment is, for example, 10 µm or more and 300 µm or less, and more preferably 50 µm or more and 200 µm or less, from a viewpoint of handleability and maintaining strength of the membrane.

The polymer electrolyte membrane 40 can be obtained by, for example, the following process. The above-described amounts of urethane (meth)acrylate, (meth)acrylate monomer, vinyl monomer, and photopolymerization initiator are added and mixed in a container, and an ultraviolet curable resin composition is thereby prepared (preparation step). The obtained ultraviolet curable resin composition is applied to a first separate film, using, for example, a coating device and a resin layer including the ultraviolet curable resin composition is layered (resin layer layering step). Next, a second separate film is arranged on a front surface of the layered resin layer (film arrangement step). The resin layer is irradiated with ultraviolet light via the first separate film or the second separate film, and the resin layer is thereby cured (curing step). The first separate film and the second separate film arranged on both surfaces of the resin layer are peeled off (peeling step), and the resin layer, that is, the polymer electrolyte membrane 40, is obtained.

Examples of the coating device used in the resin layer layering step include a die coater, a comma coater, and the like. Wavelength of ultraviolet light that is radiated on the resin layer in the curing step is, for example, 200 nm or more and 800 nm or less. The cumulative amount of ultraviolet light that is radiated on the resin layer is, for example, 1000 mJ/cm² or more and 10000 mJ/cm² or less. From a viewpoint of uniformly curing the ultraviolet curable resin composition constituting the resin layer in the thickness direction of the resin layer, the wavelength of the ultraviolet light is preferably 400 nm or more and 800 nm or less. In addition, when the ultraviolet curable resin composition is irradiated with ultraviolet light having a wavelength of 400 nm or more and 800 nm or less, the photopolymerization initiator contained in the ultraviolet curable resin composition is preferably Omnirad 819 or Omnirad EMK that absorbs ultraviolet light having a wavelength of 400 nm or more.

Thicknesses of the first separate film and the second separate film used in the resin layer layering step and the film arrangement step, respectively are, for example, 25 µm or more and 100 µm or less, and preferably 75 µm or more and 100 µm or less, from a viewpoint of facilitating arrangement and peeling-off of the separate films. Examples of a material of the separate films include polyethylene, polypropylene, polyimide, polyamide, polyethylene naphthalate, and polyethylene terephthalate. From a viewpoint of efficiently irradiating the resin layer with ultraviolet light radiated during the curing step, the separate films are preferably colorless and transparent. In addition, from a viewpoint of facilitating the peeling-off of the separate films from the resin layer, release treatment may be applied to the surfaces of the separate films. Examples of a treatment agent for the release treatment include a silicone-based treatment agent and a fluorine-based treatment agent.

In the resin layer layering step, the layered resin layer may be heated. Since through this processing, the resin layer is cured, the thickness of the resin layer is unlikely to change when the second separate film is laminated in the next step. In addition, although the polymer electrolyte membrane 40 of the embodiment is manufactured through the resin layer layering step, the film arrangement step, the curing step, and the peeling step in this order, the polymer electrolyte membrane 40 may be obtained without executing the film arrangement step. That is, the polymer electrolyte membrane 40 may be obtained by radiating ultraviolet light on the resin layer obtained in the resin layer layering step without arranging the second separate film and executing the curing step in which the resin layer is cured and the peeling step.

The obtained polymer electrolyte membrane 40 can be used as a polymer electrolyte membrane used in a polymer electrolyte fuel cell, more specifically, as a polymer electrolyte membrane used in a proton exchange type polymer electrolyte fuel cell.

In addition, the obtained polymer electrolyte membrane 40 can be used as a polymer electrolyte membrane used in a polymer electrolyte water electrolysis device, more specifically, as a polymer electrolyte membrane used in a proton exchange type polymer electrolyte water electrolysis device.

### [Polymer Electrolyte Fuel Cell]

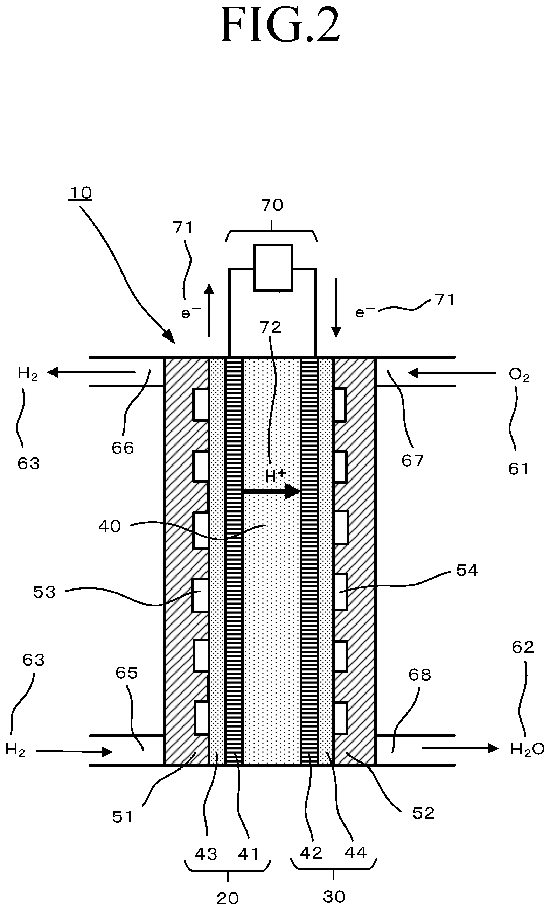

The polymer electrolyte fuel cell is described using a proton exchange type polymer electrolyte fuel cell 10 using the polymer electrolyte membrane 40 of the embodiment as an example. As illustrated in FIG. 2, the proton exchange type polymer electrolyte fuel cell 10 includes an anode electrode 20, a cathode electrode 30, the polymer electrolyte membrane 40, a separator 51, and a separator 52.

The anode electrode 20 includes an anode catalyst layer 41 and a gas diffusion layer 43. The anode catalyst layer 41 is layered on one surface of the polymer electrolyte membrane 40. The gas diffusion layer 43 is layered on the other surface of the anode catalyst layer 41 that is a surface on the opposite side to one surface of the anode catalyst layer 41 on which the polymer electrolyte membrane 40 is layered. That is, the anode catalyst layer 41 and the gas diffusion layer 43 are laminated on the polymer electrolyte membrane 40 in this order from a side closer to the polymer electrolyte membrane 40. The gas diffusion layer 43 corresponds to a first gas diffusion layer.

The cathode electrode 30 includes a cathode catalyst layer 42 and a gas diffusion layer 44. The cathode catalyst layer 42 is layered on the other surface of the polymer electrolyte membrane 40. The gas diffusion layer 44 is layered on the other surface of the cathode catalyst layer 42 that is a surface on the opposite side to one surface of the cathode catalyst layer 42 on which the polymer electrolyte membrane 40 is layered. That is, the cathode catalyst layer 42 and the gas diffusion layer 44 are laminated on the polymer electrolyte membrane 40 in this order from a side closer to the polymer electrolyte membrane 40. The gas diffusion layer 44 corresponds to a second gas diffusion layer.

The anode catalyst layer 41 has a catalytic function of facilitating an oxidation reaction of hydrogen. Examples of a material of the anode catalyst layer 41 include a carbon support with a platinum loading of 50 wt%. Specifically, examples of the material include TEC10E50E (manufactured by TANAKA PRECIOUS METAL TECHNOLOGIES Co., Ltd.).

The cathode catalyst layer 42 has a catalytic function of facilitating a reduction reaction of oxygen. Examples of a material of the cathode catalyst layer 42 include a carbon support with a platinum loading of 50 wt%. Specifically, examples of the material include TEC10E50E (manufactured by TANAKA PRECIOUS METAL TECHNOLOGIES Co., Ltd.).

The gas diffusion layer 43 has a function of diffusing hydrogen (H₂) 63 supplied from the outside throughout the entire anode catalyst layer 41. The gas diffusion layer 44 has a function of diffusing oxygen (O₂) 61 supplied from the outside throughout the entire cathode catalyst layer 42. Examples of materials of the gas diffusion layer 43 and the gas diffusion layer 44 include carbon paper the surface of which is subjected to water repellent treatment. Specifically, examples of the materials include SGL24-BCH (manufactured by SGL Carbon SE).

The polymer electrolyte membrane 40 allows protons (H⁺) 72 generated by the oxidation reaction of hydrogen in the anode catalyst layer 41 to pass through.

To protect the anode electrode 20, the polymer electrolyte membrane 40, and the cathode electrode 30, a pair of the separator 51 and the separator 52 are arranged to sandwich the anode electrode 20, the polymer electrolyte membrane 40, and the cathode electrode 30. The separator 51 is arranged on the other surface of the gas diffusion layer 43 that is a surface on the opposite side to one surface of the gas diffusion layer 43 on which the anode catalyst layer 41 is layered. The separator 52 is arranged on the other surface of the gas diffusion layer 44 that is a surface on the opposite side to one surface of the gas diffusion layer 44 on which the cathode catalyst layer 42 is layered. The separator 51 and the separator 52 have a plurality of grooves 53 and a plurality of grooves 54 on one surfaces of the separator 51 and the separator 52, respectively, as illustrated in FIG. 2. The grooves 53 and the grooves 54 are made on the one surfaces of the separator 51 and the separator 52 in parallel with one another in directions orthogonal to longitudinal directions of the grooves 53 and the grooves 54, respectively. Examples of the separator 51 and the separator 52 include a metal separator manufactured by Mik Lab Co., Ltd.

The separator 51 that has the grooves 53 on a front surface is arranged on the gas diffusion layer 43 in such a way that the surface on which the grooves 53 are made comes into contact with the gas diffusion layer 43. The grooves 53 are connected to a supply passage 65 that supplies the hydrogen (H₂) 63 and has a function of flowing the hydrogen (H₂) 63. In addition, the grooves 53 are also connected to a discharge passage 66 that discharges the hydrogen (H₂) 63.

The separator 52 that has the grooves 54 on a front surface is arranged on the gas diffusion layer 44 in such a way that the surface on which the grooves 54 are made comes into contact with the gas diffusion layer 44. The grooves 54 are connected to a supply passage 67 that supplies the oxygen (O₂) 61 and has a function of flowing the oxygen (O₂) 61. In addition, the grooves 54 are also connected to a discharge passage 68 that discharges water (H₂O) 62 generated by a reduction reaction of the oxygen (O₂) 61 with the protons (H⁺) 72 in the cathode catalyst layer 42.

The separator 51 corresponds to a first separator. The separator 52 corresponds to a second separator.

Next, a mechanism by which the proton exchange type polymer electrolyte fuel cell 10 generates electromotive force is described.

The hydrogen (H₂) 63 supplied from the outside via the supply passage 65 passes the grooves 53 of the separator 51 and reaches the anode catalyst layer 41 via the gas diffusion layer 43. The hydrogen (H₂) 63 that has reached the anode catalyst layer 41 undergoes an oxidation reaction of hydrogen, that is, a reaction H₂→2H⁺+2e⁻, and protons (H⁺) 72 and electrons (e⁻) 71 are generated. Hydrogen (H₂) 63 that does not react in the anode catalyst layer 41 is discharged by way of the discharge passage 66 to the outside of the proton exchange type polymer electrolyte fuel cell 10. The electrons (e⁻) 71 return to the proton exchange type polymer electrolyte fuel cell 10 by way of an external circuit 70. On this occasion, electromotive force is generated in the proton exchange type polymer electrolyte fuel cell 10.

The protons (H⁺) 72 pass through the polymer electrolyte membrane 40 and reach the cathode catalyst layer 42. The oxygen (O₂) 61 supplied from the supply passage 67 reaches the cathode catalyst layer 42 via the grooves 54 and the gas diffusion layer 44. In the cathode catalyst layer 42, water (H₂O) 62 is generated by the reduction reaction of the oxygen (O₂) 61 with the protons (H⁺) 72. A specific reduction reaction is a reaction 4H⁺+O₂+4e⁻→2H₂O. The water (H₂O) 62 generated by this reaction is discharged to the outside of the proton exchange type polymer electrolyte fuel cell 10 by way of the discharge passage 68.

Since the polymer electrolyte membrane 40 of the embodiment having acidic functional groups throughout the entire membrane can efficiently transfer the protons (H⁺) 72 generated in the anode catalyst layer 41 to the cathode catalyst layer 42, the polymer electrolyte membrane 40 has excellent proton conductivity.

### [Polymer Electrolyte Water Electrolysis Device]

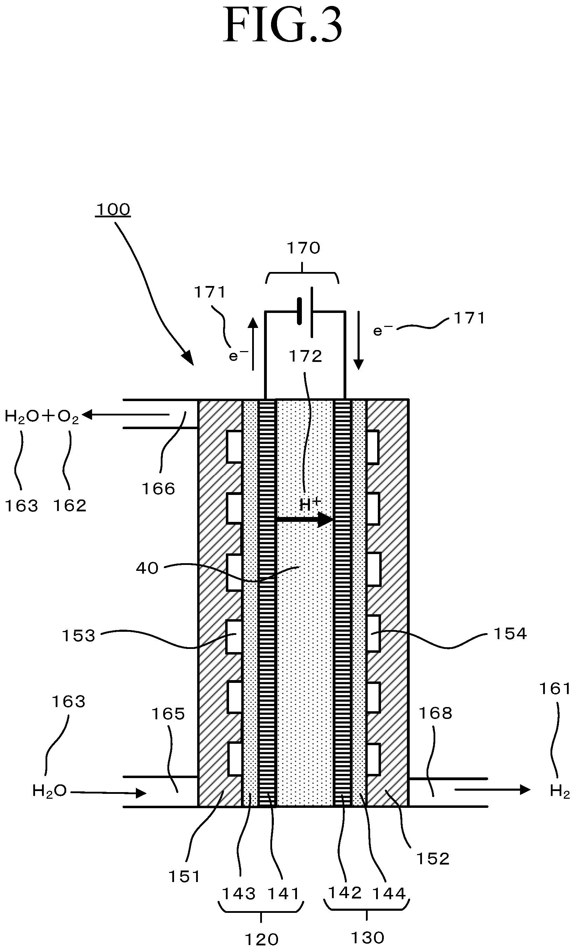

Next, the polymer electrolyte water electrolysis device is described using a proton exchange type polymer electrolyte water electrolysis device 100 using the polymer electrolyte membrane 40 of the embodiment as an example. As illustrated in FIG. 3, the proton exchange type polymer electrolyte water electrolysis device 100 includes an anode electrode 120, a cathode electrode 130, the polymer electrolyte membrane 40, a separator 151, and a separator 152.

The anode electrode 120 includes an anode catalyst layer 141 and a gas diffusion layer 143. The anode catalyst layer 141 is layered on one surface of the polymer electrolyte membrane 40. The gas diffusion layer 143 is layered on the other surface of the anode catalyst layer 141 that is a surface on the opposite side to one surface of the anode catalyst layer 141 on which the polymer electrolyte membrane 40 is layered. That is, the anode catalyst layer 141 and the gas diffusion layer 143 are laminated on the polymer electrolyte membrane 40 in this order from a side closer to the polymer electrolyte membrane 40. The gas diffusion layer 143 corresponds to a first gas diffusion layer.

The cathode electrode 130 includes a cathode catalyst layer 142 and a gas diffusion layer 144. The cathode catalyst layer 142 is layered on the other surface of the polymer electrolyte membrane 40. The gas diffusion layer 144 is layered on the other surface of the cathode catalyst layer 142 that is a surface on the opposite side to one surface of the cathode catalyst layer 142 on which the polymer electrolyte membrane 40 is layered. That is, the cathode catalyst layer 142 and the gas diffusion layer 144 are laminated on the polymer electrolyte membrane 40 in this order from a side closer to the polymer electrolyte membrane 40. The gas diffusion layer 144 corresponds to a second gas diffusion layer.

The anode catalyst layer 141 has a catalytic function of facilitating a water splitting reaction. Examples of a material of the anode catalyst layer 141 include a carbon support containing iridium oxide. Specifically, examples of the material include ELC-0110 (the amount of iridium is 1 mg/cm²) (manufactured by TANAKA PRECIOUS METAL TECHNOLOGIES Co., Ltd.).

The cathode catalyst layer 142 has a catalytic function of facilitating a reduction reaction of hydrogen. Examples of a material of the cathode catalyst layer 142 include a carbon support with a platinum loading of 50 wt%. Specifically, examples of the material include TEC10E50E (the amount of platinum is 1 mg/cm²) (manufactured by TANAKA PRECIOUS METAL TECHNOLOGIES Co., Ltd.).

The gas diffusion layer 143 has a function of diffusing water (H₂O) 163 supplied from grooves 153 of the separator 151 and spreading the water (H₂O) 163 throughout the entire anode catalyst layer 141. The gas diffusion layer 144 has a function of diffusing hydrogen (H₂) 161 that is generated by a reaction, in the cathode catalyst layer 142, of the protons (H⁺) 172 generated by the water splitting reaction in the anode catalyst layer 141 and the electrons (e⁻) 171 supplied from a power source 170, throughout the entire separator 152 and efficiently guiding the hydrogen (H₂) 161 to the grooves 154.

Examples of a material of the gas diffusion layer 143 include a titanium porous body having excellent corrosion resistance and high strength. Specifically, examples of the material include WEBTi (registered trademark)-K (manufactured by Toho Titanium Co., Ltd.).

Examples of a material of the gas diffusion layer 144 include carbon paper the surface of which is subjected to water repellent treatment. Specifically, examples of the material includes SIGRACET (registered trademark) 39BC (manufactured by SLG Carbon SE).

The polymer electrolyte membrane 40 allows only the protons (H⁺) 172 generated by the water splitting reaction in the anode catalyst layer 141 to pass through.

To protect the anode electrode 120, the polymer electrolyte membrane 140, and the cathode electrode 130, a pair of the separator 151 and the separator 152 are arranged to sandwich the anode electrode 120, the polymer electrolyte membrane 140, and the cathode electrode 130. The separator 151 is arranged on the other surface of the gas diffusion layer 143 that is a surface on the opposite side to one surface of the gas diffusion layer 143 on which the anode catalyst layer 141 is layered. The separator 152 is arranged on the other surface of the gas diffusion layer 144 that is a surface on the opposite side to one surface of the gas diffusion layer 144 on which the cathode catalyst layer 142 is layered. The separator 151 and the separator 152 have a plurality of grooves 153 and a plurality of grooves 154 on one surfaces of the separator 151 and the separator 152, respectively, as illustrated in FIG. 3. The grooves 153 and the grooves 154 are made on the one surfaces of the separator 151 and the separator 152 in parallel with one another in directions orthogonal to longitudinal directions of the grooves 153 and the grooves 154, respectively. Examples of the separator 151 include a water electrolysis side gold-plated titanium separator (manufactured by Mik Lab Co., Ltd.). Examples of the separator 152 include a hydrogen generation side gold-plated titanium separator (manufactured by Mik Lab Co., Ltd.).

The separator 151 that has the grooves 153 on a front surface is arranged on the gas diffusion layer 143 in such a way that the surface on which the grooves 153 are made comes into contact with the gas diffusion layer 143. The grooves 153 are connected to a supply passage 165 that supplies the water (H₂O) 163 and has a function of flowing the water (H₂O) 163. In addition, the grooves 153 are also connected to a discharge passage 166 that discharges the water (H₂O) 163 and oxygen (O₂) 162.

The separator 152 that has the grooves 154 on a front surface is arranged on the gas diffusion layer 144 in such a way that the surface on which the grooves 154 are made comes into contact with the gas diffusion layer 144. The grooves 154 are connected to a discharge passage 168 that discharges the hydrogen (H₂) 161.

The separator 151 corresponds to a first separator. The separator 152 corresponds to a second separator.

The power source 170 supplies electricity to the proton exchange type polymer electrolyte water electrolysis device 100.

Next, a mechanism by which hydrogen is generated from the proton exchange type polymer electrolyte water electrolysis device 100 is described.

The water (H₂O) 163 supplied from the outside via the supply passage 165 passes the grooves 153 of the separator 151 and reaches the anode catalyst layer 141 via the gas diffusion layer 143. The water (H₂O) 163 that has reached the anode catalyst layer 141 is electrolyzed by electricity (electrons (e⁻) 171) supplied from the power source 170 in the anode catalyst layer 141. Due to the electrolysis of water, that is, a reaction 2H₂O→4H⁺+4e⁻+O₂, protons (H⁺), electrons (e⁻), and oxygen (O₂) are generated from the water (H₂O). Unreacted water (H₂O) 163 and the oxygen (O₂) 162 generated by the reaction are discharged to the outside of the proton exchange type polymer electrolyte water electrolysis device 100 via the discharge passage 166.

The protons (H⁺) 172 pass through the polymer electrolyte membrane 40 and reach the cathode catalyst layer 142. In the cathode catalyst layer 142, due to a reaction between the protons (H⁺) 172 and the electrons (e⁻) 171 supplied from the power source 170, that is, 2H⁺+2e⁻→H₂, hydrogen (H₂) is generated. The generated hydrogen (H₂) 161 passes the grooves 154 of the separator 152 via the gas diffusion layer 144 and is stored outside the proton exchange type polymer electrolyte water electrolysis device 100 by way of the discharge passage 168.

Since the polymer electrolyte membrane 40 of the embodiment having acidic functional groups in the thickness direction of the membrane and across a main surface of the membrane can efficiently transfer the protons (H⁺) 172 generated in the anode catalyst layer 141 to the cathode catalyst layer 142, the polymer electrolyte membrane 40 has excellent proton conductivity.

### [Examples]

Hereinbelow, the present disclosure is described more in detail using the following examples. The present disclosure is not limited at all by the following examples.

As components contained in ultraviolet curable resin compositions in the examples and comparative examples, the following materials were used.

### (Ester-Based Urethane (Meth)Acrylate)

### (1) CWD8E26 (manufactured by Negami Chemical Industrial Co., Ltd.)

Weight-average molecular weight is 20000, double bond equivalent is 5000 g/mol, glass transition temperature (Tg) is -19°C, viscosity at 25°C is 150000 mPa-s, and the number of functional groups is 4.

### (2) CWD11N (manufactured by Negami Chemical Industrial Co., Ltd.)

Weight-average molecular weight is 10500, double bond equivalent is 3500 g/mol, Tg is -37°C, viscosity at 25°C is 30000 Pa-s, and the number of functional groups is 3.

### (Adduct-Based Urethane (Meth)Acrylate)

### (3) SMT001 (manufactured by Negami Chemical Industrial Co., Ltd.)

Weight-average molecular weight is 1700, double bond equivalent is 567 g/mol, Tg is 103°C, viscosity at 25°C is 1000000 Pa-s, viscosity at 60°C is 250000 Pa-s, and the number of functional groups is 3.

### (4) UN2701 (manufactured by Negami Chemical Industrial Co., Ltd.)

Weight-average molecular weight is 1500, double bond equivalent is 750 g/mol, Tg is 57°C, viscosity at 25°C is 600000 Pa-s, and the number of functional groups is 2.

### (5) UN2600 (manufactured by Negami Chemical Industrial Co., Ltd.)

Weight-average molecular weight is 1600, double bond equivalent is 800 g/mol, Tg is 10°C, viscosity at 25°C is 10000 Pa-s, and the number of functional groups is 2.

### (Carbonate-Based Urethane (Meth)Acrylate)

### (6) UN9000PEP (manufactured by Negami Chemical Industrial Co., Ltd.)

Weight-average molecular weight is 5000, double bond equivalent is 2500 g/mol, Tg is -7°C, viscosity at 25°C is 2000000 Pa-s, and the number of functional groups is 2.

### (7) UN9200 (manufactured by Negami Chemical Industrial Co., Ltd.)

Weight-average molecular weight is 15000, double bond equivalent is 7500 g/mol, Tg is -27°C, viscosity at 25°C is 2000000 Pa-s, and the number of functional groups is 2.

### ((Meth)Acrylate Monomer)

### (1) Light Ester PO (manufactured by Kyoeisha Chemical Co., Ltd.)

Weight-average molecular weight is 201, double bond equivalent is 201 g/mol, viscosity at 25°C is 7 Pa-s, and the number of functional groups is 1.

### (Vinyl Monomer)

Vinylphosphonic Acid CAS RN 1746-03-8 (manufactured by Tokyo Chemical Industry Co., Ltd.)

Weight-average molecular weight is 108, double bond equivalent is 108 g/mol, and the number of functional groups is 1.

### (Photopolymerization Initiator)

Omnirad819 (manufactured by IGM RESINS)

### (Example 1)

### (Preparation of Ultraviolet Curable Resin Composition)

To a reaction container, 33.3 parts by weight of Light Ester PO and 3.0 parts by weight of Omnirad819 were added, and subsequently the mixture was stirred at 70°C. To the reaction container, 33.3 parts by weight of CWD8E26 heated to 70°C was added to the mixture, and the resultant mixture was stirred until the mixture was uniformly mixed. Subsequently, the mixture was cooled to room temperature. Next, 33.3 parts by weight of CAS RN 1746-03-8 was added to the reaction container and the mixture was stirred, and an ultraviolet curable resin composition was obtained. Note that the preparation was performed in a room where a yellow lamp was used to suppress a reaction of the initiator due to visible light.

### (Preparation of Polymer Electrolyte Membrane)

Using a die coater, the ultraviolet curable resin composition was applied to a release-treated surface of a first release PET film (PET75X manufactured by LINTEC Corporation) with a thickness of 75 µm in such a way that the thickness after curing becomes 150 µm. Next, a second release PET film (PET75X manufactured by LINTEC Corporation) was arranged on a surface of the resin after coating in such a way that the surface of the resin and a release-treated surface of the second release PET film come into contact with each other. Subsequently, ultraviolet light was radiated using a high-pressure mercury lamp (Industrial UV Checker UVR-T1 manufactured by Topcon Technohouse Corporation), and the ultraviolet curable resin composition was thereby cured. Irradiation conditions were set to an irradiance of 150±20 W/cm² and a cumulative light amount of 2000 mJ/cm². The resin layer, that is, the polymer electrolyte membrane, was obtained by peeling off the first and second release PET films from a laminated body in which the first release PET film, the resin layer, and the second release PET film were laminated in this order.

### (Evaluation of Proton Conductivity)

Proton conductivity of the obtained polymer electrolyte membrane was evaluated. First, a resistance value, thickness, and electrode area of the polymer electrolyte membrane were measured. By substituting obtained values of the resistance value, thickness, and electrode area into Equation (1), the proton conductivity was calculated. Next, the proton conductivity was evaluated according to the following criteria.

Equation (1): Proton conductivity (mS/cm)=1000×(thickness of polymer electrolyte membrane (cm))/((electrode area (cm²))×(resistance value (Ω))), where S in the unit of proton conductivity (mS/cm) denotes siemens.

Excellent: 8 mS/cm or more,
Good: 3 mS/cm or more and less than 8 mS/cm, and
Poor: less than 3 mS/cm.

To obtain the "resistance value" in Equation (1), AC impedance of the polymer electrolyte membrane was measured. The AC impedance was measured using an electrochemical measurement apparatus (Hz-Pro S4 manufactured by HOKUTO DENKO CORPORATION) and a high-precision resistance measurement system (IMC-008D(A) manufactured by Imoto machinery Co., LTD.).

Specifically, a polymer electrolyte membrane cut into a 4 cm square that was dipped in ion-exchanged water at 25°C for 24 hours and subsequently taken out from the ion-exchanged water and from which water droplets were wiped off was used as a test specimen. Next, the test specimen was held between a pair of gold-plated electrodes provided in the high-precision resistance measurement system with 1 MPa pressure. Subsequently, a working electrode provided in the electrochemical measurement apparatus was connected to one of the gold-plated electrodes, and a reference electrode provided in the electrochemical measurement apparatus was connected to the other of the gold-plated electrodes. In addition, a counter electrode provided in the electrochemical measurement apparatus was connected to the reference electrode, and the AC impedance of the polymer electrolyte membrane was measured. The measurement conditions were set to a temperature of 25°C, a relative humidity of 50% RH, a measurement frequency range of 1 kHz to 1 MHz, and an AC amplitude of 10 mV.

A Nyquist plot was generated from the measured AC impedance, using dedicated software (EIS 1.2.2 manufactured by HOKUTO DENKO CORPORATION), and a resistance value of the polymer electrolyte membrane was calculated. Note that the "Nyquist plot" refers to a graph obtained by measuring the AC impedance of an object to be measured by changing frequency and plotting the measured AC impedance on a complex plane with the X-axis representing the real component and the Y-axis representing the imaginary component.

The proton conductivity of the polymer electrolyte membrane including the ultraviolet curable resin composition in Example 1 obtained by the above-described method was 7.5 mS/cm, and an evaluation result was Good.

Next, strength of the polymer electrolyte membrane was evaluated. The strength of the polymer electrolyte membrane was evaluated by measuring the amount of gas leakage and tensile strength of the polymer electrolyte membrane.

### (Amount of Gas Leakage)

As the amount of gas leakage of the polymer electrolyte membrane, the amount of air leakage was measured. Specifically, the amount of air leakage was measured using an air leak tester (LS-R910 manufactured by COSMO INSTRUMENTS CO., LTD.). First, a polymer electrolyte membrane cut into a 90 mm square was dipped in ion-exchanged water at 25°C for 24 hours. Next, the polymer electrolyte membrane was taken out from the ion-exchanged water and water droplets were wiped off from the surfaces of the polymer electrolyte membrane, and the polymer electrolyte membrane was placed in a chamber of the air leak tester in such a manner as to avoid any gaps. Next, air was introduced into the chamber at 50 kPa pressure for 30 seconds, and the amount of air that leaked out was measured as the amount of gas leakage.

Based on the measurement result of the amount of gas leakage, evaluation was made according to the following criteria:
Good: there is no tear in the polymer electrolyte membrane, and the amount of gas leakage is less than 100 ml; and
Poor: the polymer electrolyte membrane tears, or although there is no tear in the polymer electrolyte membrane, the amount of gas leakage is greater than or equal to 100 ml.

Since the amount of gas leakage of the polymer electrolyte membrane in Example 1 measured by the above-described method was 1.0 ml or less and there was no tear in the polymer electrolyte membrane, the evaluation result was Good.

### (Tensile Strength)

Tensile strength of the polymer electrolyte membrane was measured using a tensile tester (EZ-TEST EZ-SX 100N manufactured by SHIMAZU CORPORATION) in conformity with JIS K 7161-2. Specifically, the polymer electrolyte membrane was cut into a dumbbell shape (No. 2 test specimen prescribed in JIS K 7161-2) and dipped in ion-exchanged water at 25°C for 24 hours. Subsequently, the polymer electrolyte membrane that was taken out from the ion-exchanged water and from which water droplets on the surfaces were wiped off was used as a sample. The sample is placed in the tensile tester and the tensile strength was measured at a test speed of 50 mm/min.

Obtained tensile strength was evaluated according to the following criteria:
Excellent: 4 MPa or more;
Good: 1 MPa or more and less than 3 MPa; and
Poor: less than 1 MPa.

Since the tensile strength of the polymer electrolyte membrane in Example 1 measured by the above-described method was 1.2 MPa or less, the evaluation result was Good.

As described above, the polymer electrolyte membrane in Example 1 was found to have a proton conductivity of 7.5 mS/cm, a small amount of gas leakage, and a strength of 1 MPa or more. This result reveals that the polymer electrolyte membrane in Example 1 has excellent proton conductivity and high strength. The polymer electrolyte membrane in Example 1 can be suitably used as a polymer electrolyte membrane for a polymer electrolyte fuel cell and a polymer electrolyte water electrolysis device.

### (Example 2) to (Example 11) and (Comparative Example 1) to (Comparative Example 7)

Types and contents of components contained in ultraviolet curable resin compositions in the examples and comparative examples are illustrated in Tables 1 and 2. With regard to the ultraviolet curable resin compositions in Examples 2 to 11 and Comparative Examples 1 to 7, ultraviolet curable resin compositions were prepared by the same method as that in Example 1, except for changes in the types and contents of the components, and polymer electrolyte membranes were produced with the ultraviolet curable resin compositions.

**[Table 1]**

| | Product Name | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Urethane (Meth)Acrylate | CWD8E26 | 33.3 | - | - | - | - | - | - | - | - | - | - |
| | CWD11N | - | 33.3 | - | - | - | - | - | - | - | - | - |
| | SMT001 | - | - | - | - | - | - | - | - | - | - | - |
| | UN2701 | - | - | 33.3 | - | - | - | - | - | - | - | - |
| | UN2600 | - | - | - | 33.3 | - | - | - | - | - | - | - |
| | UN9000PEP | - | - | - | - | 33.3 | 43.3 | 40.0 | 40.0 | 33.3 | 25.0 | - |
| | UN9200 | - | - | - | - | - | - | - | - | - | - | 33.3 |
| (Meth)Acrylate Monomer | Light Ester PO | 33.3 | 33.3 | 33.3 | 33.3 | 33.3 | 33.3 | 40.0 | 30.0 | 16.7 | 25.0 | 33.3 |
| Vinyl Monomer | Vinylphosphonic Acid | 33.3 | 33.3 | 33.3 | 33.3 | 33.3 | 23.3 | 20.0 | 30.0 | 50.0 | 50.0 | 33.3 |
| Photopolymerization Initiator | Omnirad819 | 3.0 | 3.0 | 3.0 | 3.0 | 3.0 | 3.0 | 3.0 | 3.0 | 3.0 | 3.0 | 3.0 |

**[Table 2]**

| | Product Name | Comparative Example | | | | | | |
|---|---|---|---|---|---|---|---|---|
| | | 1 | 2 | 3 | 4 | 5 | 6 | 7 |
| Urethane (Meth)Acrylate | CWD8E26 | - | - | - | - | - | - | - |
| | CWD11N | - | - | - | - | - | - | - |
| | SMT001 | 33.3 | - | - | - | - | - | - |
| | UN2701 | - | - | - | - | - | - | - |
| | UN2600 | - | - | - | - | - | - | - |
| | UN9000PEP | - | 16.7 | 33.3 | 33.3 | 50.0 | 50.0 | 20.0 |
| | UN9200 | - | - | - | - | - | - | - |
| (Meth)Acrylate Monomer | Light Ester PO | 33.3 | 50.0 | 50.0 | 56.7 | 33.3 | 16.7 | 20.0 |
| Vinyl Monomer | Vinylphosphonic Acid | 33.3 | 33.3 | 16.7 | 10.0 | 16.7 | 33.3 | 60.0 |
| Photopolymerization Initiator | Omnirad819 | 3.0 | 3.0 | 3.0 | 3.0 | 3.0 | 3.0 | 3.0 |

In addition, test results of the proton conductivity, the amount of gas leakage, and the tensile strength of the polymer electrolyte membranes in the examples and the comparative example are illustrated in Tables 3 and 4. The proton conductivity, the amount of gas leakage, and the tensile strength of the polymer electrolyte membranes in Examples 2 to 11 and Comparative Examples 1 to 7 were measured using the same method as the method by which the proton conductivity and the amount of gas leakage of the polymer electrolyte membrane in Example 1 were measured. Note that the unit of content in the tables is "parts by weight" unless explicitly stated otherwise.

**[Table 3]**

| Evaluation Item | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Proton Conductivity | Measured Value [mS/cm] | 7.5 | 5.5 | 3.2 | 10.1 | 10.1 | 3.7 | 3.5 | 9 | 13.1 | 13.9 | 14.2 |
| | Determination | Good | Good | Good | Excellent | Excellent | Good | Good | Excellent | Excellent | Excellent | Excellent |
| Amount of Gas Leakage | At 50 kPa [ml] | 1.0 | 1.0 | 1.0 | 1.0 | 1.0 | 1.0 | 1.0 | 1.0 | 1.0 | 1.0 | 1.0 |
| | Determination | Good | Good | Good | Good | Good | Good | Good | Good | Good | Good | Good |
| Tensile Strength | Measured Value [MPa] | 1.2 | 1.3 | 5.2 | 1.7 | 1.2 | 1.7 | 2.9 | 2.3 | 1.1 | 1.1 | 1.1 |
| | Determination | Good | Good | Excellent | Good | Good | Good | Good | Good | Good | Good | Good |

**[Table 4]**

| Evaluation Item | | Comparative Example | | | | | | |
|---|---|---|---|---|---|---|---|---|
| | | 1 | 2 | 3 | 4 | 5 | 6 | 7 |
| Proton Conductivity | Measured Value [mS/cm] | 1.7 | 1.1 | 0.21 | 0.001 | 0.5 | Membrane unformable | Unmeas urable |
| | Determination | Poor | Poor | Poor | Poor | Poor | - | - |
| Amount of Gas Leakage | At 50 kPa [m1] | 6.0 | 999 | 1.0 | 1.0 | 1.0 | - | Unmeas urable |
| | Determination | Good | Poor | Good | Good | Good | - | - |
| Tensile Strength | Measured Value [MPa] | 4.4 | 0.02 | 2.4 | 3.7 | 5.6 | - | Unmeas urable |
| | Determination | Excellent | Poor | Good | Good | Excellent | - | - |

As illustrated in Table 3, the polymer electrolyte membranes in Examples 2 to 11 were found to also have excellent proton conductivity and high strength. In addition, the polymer electrolyte membranes in Examples 2 to 11 can also be suitably used as a polymer electrolyte membrane for a polymer electrolyte fuel cell and a polymer electrolyte water electrolysis device.

Each of the polymer electrolyte membranes in Comparative Examples 1 to 5 illustrated in Table 4 had at least one of the proton conductivity, the amount of gas leakage, and the tensile strength evaluated as Poor. The polymer electrolyte membrane in Comparative Example 6 was not able to be formed. The polymer electrolyte membrane in Comparative Example 7 was able to be formed. However, since the membrane dissolved when the membrane was dipped in ion-exchanged water, the proton conductivity, the amount of gas leakage, and the tensile strength were not able to be measured.

The results described in the foregoing reveal that the polymer electrolyte membrane including the ultraviolet curable resin composition of the present embodiment has excellent proton conductivity and high strength.

Further, the polymer electrolyte membranes in Examples 1 to 11 were evaluated with respect to chemical resistance, water resistance, initial viscosity, and pot life. Hereinbelow, the evaluations are described using the ultraviolet curable resin composition in Example 3 and the polymer electrolyte membrane including the ultraviolet curable resin composition in Example 3 as examples.

### (Chemical Resistance)

The chemical resistance was evaluated as described below. First, 30 wt% hydrogen peroxide solution (manufactured by FUJIFILM Wako Pure Chemical Corporation) was added to a plastic container and ferrous sulfate heptahydrate (manufactured by FUJIFILM Wako Pure Chemical Corporation) was added until the concentration of Fe²⁺ ions reaches 95 ppm, and chemical liquid was thereby obtained. To another plastic container, 100 ml of the chemical liquid was added, the polymer electrolyte membrane cut into a 4 cm square was dipped in the chemical liquid, and the container was left for a week at room temperature (23°C±5°C). Subsequently, the polymer electrolyte membrane was taken out from the chemical liquid, and a state of the polymer electrolyte membrane was visually confirmed.

The chemical resistance was evaluated according to the following criteria:
Excellent: the polymer electrolyte membrane has no change in an external appearance;
Good: although some of the polymer electrolyte membrane has dissolved, the polymer electrolyte membrane can be used as a polymer electrolyte membrane for a polymer electrolyte fuel cell; and
Poor: the polymer electrolyte membrane has completely dissolved.

Although a portion of the polymer electrolyte membrane in Example 3 dissolved, the polymer electrolyte membrane was able to be used as a polymer electrolyte membrane for a polymer electrolyte fuel cell, and the evaluation result was Good.

### (Water Resistance)

After a polymer electrolyte membrane cut into a 4 cm square was dipped in ion-exchanged water at 25°C for 24 hours, the polymer electrolyte membrane was taken out, and the surfaces of the polymer electrolyte membrane were visually confirmed.

The water resistance was evaluated according to the following criteria:
Good: no crack is observed; and
Poor: a crack is observed.

The polymer electrolyte membrane in Example 3 had no crack, and the evaluation result was Good.

### (Initial Viscosity)

An ultraviolet curable resin composition in Example 3 at 25°C was prepared. Viscosity of the ultraviolet curable resin composition immediately after preparation was measured using a cone and plate viscometer (E-type viscometer TV200 manufactured by Toki Sangyo Co., Ltd.). Obtained viscosity was evaluated according to the following criteria. The viscosity is referred to as initial viscosity.
Good: The viscosity is 10 Pa-s or less, and
Poor: the viscosity is greater than 10 Pa-s.

The initial viscosity of the ultraviolet curable resin composition in Example 3 was less than or equal to 10 Pa-s, and the evaluation result was Good. It was found that the ultraviolet curable resin composition with an initial viscosity of 10 Pa-s or less can be applied to a film surface without uneven coating.

### (Pot Life)

A pot life test is a test for evaluating a period during which a polymer electrolyte membrane can be produced from an ultraviolet curable resin composition. Specifically, an ultraviolet curable resin composition is placed in a hermetically sealed container. The hermetically sealed container is stored under a light-shielded condition at 25°C for 3 days. Subsequently, the viscosity of the ultraviolet curable resin composition after storage was measured at 25°C. Obtained viscosity was evaluated according to the following criteria. As a viscometer, an E-type viscometer (TV200 manufactured by Toki Sangyo Co., Ltd.) was used.
Good: The viscosity is 10 Pa-s or less, and
Poor: the viscosity is greater than 10 Pa-s.

The viscosity of the ultraviolet curable resin composition in Example 3 was less than or equal to 10 Pa-s, and the evaluation result was Good. It was found that the ultraviolet curable resin composition with a viscosity of 10 Pa-s or less after pot life test can be applied to a film surface without uneven coating.

### (Examples 1 to 11)

Evaluation results of the chemical resistance and the water resistance of the polymer electrolyte membranes in the examples and evaluation results of the initial viscosity and the pot life of the ultraviolet curable resin compositions in the examples are illustrated in Table 5.

**[Table 5]**

| Evaluation Item | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Chemical Resistance | Determination | Poor | Poor | Good | Good | Good | Good | Good | Good | Good | Good | Good |
| Water Resistance | Determination | Poor | Poor | Good | Good | Good | Good | Good | Good | Good | Good | Good |
| Initial Viscosity | Measured Value [Pa·s] | 10 ≧ | 10 ≧ | 10 ≧ | 10 ≧ | 10 ≧ | 10 ≧ | 10 ≧ | 10 ≧ | 10 ≧ | 10 ≧ | 10 ≧ |
| | Determination | Good | Good | Good | Good | Good | Good | Good | Good | Good | Good | Good |
| Pot Life | Measured Value [Pa·s] | 10< | 10< | 10 ≧ | 10 ≧ | 10 ≧ | 10 ≧ | 10 ≧ | 10 ≧ | 10 ≧ | 10 ≧ | 10 ≧ |
| | Determination | Poor | Poor | Good | Good | Good | Good | Good | Good | Good | Good | Good |

As illustrated in Table 5, the ultraviolet curable resin compositions in Examples 3 to 11 using adduct-based urethane (meth)acrylate and carbonate-based urethane (meth)acrylate have excellent initial viscosity and pot life, and was found to excel in processability as a resin composition for producing a polymer electrolyte membrane. In addition, it is found that the polymer electrolyte membrane including such an ultraviolet curable resin composition excels in the chemical resistance and the water resistance. Since the polymer electrolyte fuel cell and the polymer electrolyte water electrolysis device including such a polymer electrolyte membrane use a polymer electrolyte membrane that is resistant to degradation, lives of the polymer electrolyte fuel cell and the polymer electrolyte water electrolysis device as a fuel cell and a water electrolysis apparatus can be extended.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2023-214210, filed on December 19, 2023, the specification, the claims, and the drawings of which are incorporated by reference herein.

### (Supplementary Note 1)

An ultraviolet curable resin composition, including:
a urethane (meth)acrylate with a weight-average molecular weight of 1500 or more and 20000 or less and a double bond equivalent of 600 g/mol or more and 7500 g/mol or less;
a (meth)acrylate monomer with a molecular weight of 150 or more and 300 or less;
a vinyl monomer having an acidic functional group; and
a photopolymerization initiator,
wherein a content of the urethane (meth)acrylate is 20 wt% or more and 45 wt% or less based on a total of 100 wt% of the urethane (meth)acrylate, the (meth)acrylate monomer, and the vinyl monomer,
a content of the (meth)acrylate monomer is 15 wt% or more and 45 wt% or less based on a total of 100 wt% of the urethane (meth)acrylate, the (meth)acrylate monomer, and the vinyl monomer, and
a content of the vinyl monomer is 20 wt% or more and 55 wt% or less based on a total of 100 wt% of the urethane (meth)acrylate, the (meth)acrylate monomer, and the vinyl monomer.

### (Supplementary Note 2)

The ultraviolet curable resin composition according to Supplementary Note 1, wherein the acidic functional group is at least one type selected from a group consisting of a carboxy group, a phosphonic acid group, a sulfonic acid group, and a phosphoric acid group.

### (Supplementary Note 3)

The ultraviolet curable resin composition according to Supplementary Note 1 or 2, wherein a number of the acidic functional groups in the vinyl monomer is 1 or 2.

### (Supplementary Note 4)

A polymer electrolyte membrane including a cured ultraviolet curable resin composition according to any one of Supplementary Notes 1 to 3.

### (Supplementary Note 5)

A polymer electrolyte fuel cell, including: the polymer electrolyte membrane according to Supplementary Note 4;
an anode catalyst layer that is layered on one surface of the polymer electrolyte membrane;
a cathode catalyst layer that is layered on other surface of the polymer electrolyte membrane;
a first gas diffusion layer that is layered on other surface of the anode catalyst layer, the other surface being a surface on an opposite side to one surface of the anode catalyst layer on which the polymer electrolyte membrane is layered;
a second gas diffusion layer that is layered on other surface of the cathode catalyst layer, the other surface being a surface on an opposite side to one surface of the cathode catalyst layer on which the polymer electrolyte membrane is layered;
a first separator that is arranged on other surface of the first gas diffusion layer, the other surface being a surface on an opposite side to one surface of the first gas diffusion layer on which the anode catalyst layer is layered; and
a second separator that is arranged on other surface of the second gas diffusion layer, the other surface being a surface on an opposite side to one surface of the second gas diffusion layer on which the cathode catalyst layer is layered.

### (Supplementary Note 6)

A polymer electrolyte water electrolysis device, including: the polymer electrolyte membrane according to Supplementary Note 4;
an anode catalyst layer that is layered on one surface of the polymer electrolyte membrane;
a cathode catalyst layer that is layered on other surface of the polymer electrolyte membrane;
a first gas diffusion layer that is layered on other surface of the anode catalyst layer, the other surface being a surface on an opposite side to one surface of the anode catalyst layer on which the polymer electrolyte membrane is layered;
a second gas diffusion layer that is layered on other surface of the cathode catalyst layer, the other surface being a surface on an opposite side to one surface of the cathode catalyst layer on which the polymer electrolyte membrane is layered;
a first separator that is arranged on other surface of the first gas diffusion layer, the other surface being a surface on an opposite side to one surface of the first gas diffusion layer on which the anode catalyst layer is layered; and
a second separator that is arranged on other surface of the second gas diffusion layer, the other surface being a surface on an opposite side to one surface of the second gas diffusion layer on which the cathode catalyst layer is layered.

### (Supplementary Note 7)

A method for producing a polymer electrolyte membrane, the method including:
preparing the ultraviolet curable resin composition according to any one of Supplementary Notes 1 to 3;
layering a resin layer including the ultraviolet curable resin composition on one separate film;
arranging another separate film on other surface of the resin layer, the other surface being a surface on an opposite side to one surface of the resin layer on which the one separate film is arranged;
irradiating the resin layer with ultraviolet light via the one separate film or the another separate film and curing the resin layer; and
peeling off the one separate film and the another separate film from the cured resin layer.

### Reference Signs List

10 Proton exchange type polymer electrolyte fuel cell
100 Proton exchange type polymer electrolyte water electrolysis device
20, 120 Anode electrode
30, 130 Cathode electrode
40 Polymer electrolyte membrane
41, 141 Anode catalyst layer
42, 142 Cathode catalyst layer
43, 44, 143, 144 Gas diffusion layer
51, 52, 151, 152 Separator
53, 54, 153, 154 Groove
61, 162 Oxygen
62, 163 Water
63, 161 Hydrogen
65, 67, 165 Supply passage
66, 68, 166, 168 Discharge passage
70 External circuit
71, 171 Electron
72, 172 Proton
170 Power source

## Claims

1. An ultraviolet curable resin composition, comprising:
a urethane (meth)acrylate with a weight-average molecular weight of 1500 or more and 20000 or less and a double bond equivalent of 600 g/mol or more and 7500 g/mol or less;
a (meth)acrylate monomer with a molecular weight of 150 or more and 300 or less;
a vinyl monomer having an acidic functional group; and
a photopolymerization initiator,
wherein a content of the urethane (meth)acrylate is 20 wt% or more and 45 wt% or less based on a total of 100 wt% of the urethane (meth)acrylate, the (meth)acrylate monomer, and the vinyl monomer,
a content of the (meth)acrylate monomer is 15 wt% or more and 45 wt% or less based on a total of 100 wt% of the urethane (meth)acrylate, the (meth)acrylate monomer, and the vinyl monomer, and
a content of the vinyl monomer is 20 wt% or more and 55 wt% or less based on a total of 100 wt% of the urethane (meth)acrylate, the (meth)acrylate monomer, and the vinyl monomer.

2. The ultraviolet curable resin composition according to claim 1,
wherein the acidic functional group is at least one type selected from a group consisting of a carboxy group, a phosphonic acid group, a sulfonic acid group, and a phosphoric acid group.

3. The ultraviolet curable resin composition according to claim 1 or 2, wherein a number of the acidic functional groups in the vinyl monomer is 1 or 2.

4. A polymer electrolyte membrane comprising a cured ultraviolet curable resin composition according to any one of claims 1 to 3.

5. A polymer electrolyte fuel cell, comprising:
the polymer electrolyte membrane according to claim 4;
an anode catalyst layer that is layered on one surface of the polymer electrolyte membrane;
a cathode catalyst layer that is layered on other surface of the polymer electrolyte membrane;
a first gas diffusion layer that is layered on other surface of the anode catalyst layer, the other surface being a surface on an opposite side to one surface of the anode catalyst layer on which the polymer electrolyte membrane is layered;
a second gas diffusion layer that is layered on other surface of the cathode catalyst layer, the other surface being a surface on an opposite side to one surface of the cathode catalyst layer on which the polymer electrolyte membrane is layered;
a first separator that is arranged on other surface of the first gas diffusion layer, the other surface being a surface on an opposite side to one surface of the first gas diffusion layer on which the anode catalyst layer is layered; and
a second separator that is arranged on other surface of the second gas diffusion layer, the other surface being a surface on an opposite side to one surface of the second gas diffusion layer on which the cathode catalyst layer is layered.

6. A polymer electrolyte water electrolysis device, comprising:
the polymer electrolyte membrane according to claim 4;
an anode catalyst layer that is layered on one surface of the polymer electrolyte membrane;
a cathode catalyst layer that is layered on other surface of the polymer electrolyte membrane;
a first gas diffusion layer that is layered on other surface of the anode catalyst layer, the other surface being a surface on an opposite side to one surface of the anode catalyst layer on which the polymer electrolyte membrane is layered;
a second gas diffusion layer that is layered on other surface of the cathode catalyst layer, the other surface being a surface on an opposite side to one surface of the cathode catalyst layer on which the polymer electrolyte membrane is layered;
a first separator that is arranged on other surface of the first gas diffusion layer, the other surface being a surface on an opposite side to one surface of the first gas diffusion layer on which the anode catalyst layer is layered; and
a second separator that is arranged on other surface of the second gas diffusion layer, the other surface being a surface on an opposite side to one surface of the second gas diffusion layer on which the cathode catalyst layer is layered.

7. A method for producing a polymer electrolyte membrane, the method comprising:
preparing the ultraviolet curable resin composition according to any one of claims 1 to 3;
layering a resin layer including the ultraviolet curable resin composition on one separate film;
arranging another separate film on other surface of the resin layer, the other surface being a surface on an opposite side to one surface of the resin layer on which the one separate film is arranged;
irradiating the resin layer with ultraviolet light via the one separate film or the another separate film and curing the resin layer; and
peeling off the one separate film and the another separate film from the cured resin layer.
